# EUROPEAN PATENT APPLICATION

(11) **EP 3 357 566 A1**
(43) Date of publication of application: **08.08.2018**
(21) Application number: 18154354.7
(22) Date of filing: 31.01.2018
(51) Int. Cl.: B01F 5/04, C02F 1/68

(54) **DIFFUSER FOR MIXING TWO FLUIDS INSIDE PIPES IN WHICH A CARRIER FLUID FLOWS**

(30) Priority: 02.02.2017 IT 201700011196
(71) Applicant: SOL S.p.A., 20900 Monza (IT)
(72) Inventor: GALIMBERTI, Nicolò, 20900 MONZA (IT)
(74) Representative: Modiano, Micaela Nadia

(57) **Abstract**

A diffuser (1) for mixing two fluids inside pipes in which a carrier fluid flows, the diffuser comprising a first tube (2) and a second tube (3), which are arranged mutually concentric, the first tube (2) and the second tube (3) being mutually separated, the first tube (2) being provided on its outer surface with a plurality of holes (13), the second tube (3) being internal to the first tube (2), each one of the first and second tubes (2, 3) being provided with an intake (4, 5) with a corresponding valve (6, 7).

## Description

The present invention relates to a diffuser for mixing two fluids inside pipes in which a carrier fluid flows. More specifically, the invention relates to a diffuser that is adapted to be used in the treatment of drinking water and runoff water.

Nowadays, to treat drinking water and runoff water and particularly in order to purify water for drinking, the water is usually treated by suppressing suspended particles, first with a compound capable of adjusting the pH, for example sulfuric acid or CO₂, and then with a chemical compound (coagulant) that acts under conditions of controlled pH and enables the separation of the solid particles from the water in a subsequent filtration step.

The introduction of the fluid (be it gas or liquid) for controlling pH into the water occurs by way of various different systems that use nozzles, jet pipes or porous diffusers. By contrast, the introduction of the coagulant usually occurs by way of simple direct dosing systems (dosing pumps or regulating valves). Both systems, for dosing and mixing, are arranged directly inside a free portion of pipe.

The mixing systems in use require sufficient times for the reagents to be in contact with the water in order to ensure an even distribution thereof. However, in many systems the lengths of the pipes dedicated to these operations are a few meters and this does not ensure that an adequate uniformity of distribution is obtained: the end result is that often it is necessary to overdose the coagulant in order to ensure its efficacy.

However, this can entail the presence of high levels of residues of unused coagulant (for example an organometallic compound) in the treated water. The present invention has been developed and designed to reduce and optimize the use of these chemical compounds and avoid the above situation.

The aim of the present invention is therefore to provide a diffuser for mixing two fluids inside pipes in which a carrier fluid flows.

Within this aim, an object of the present invention is to provide a diffuser for mixing two fluids inside pipes in which a carrier fluid flows, which makes it possible to reduce residual contents of metals present in the treated water.

Another object of the present invention is to provide a diffuser for mixing two fluids inside pipes in which the carrier fluid flows, which makes it possible to mix two different fluids into the treated fluid with simultaneous introduction.

Another object of the present invention is to provide a diffuser for mixing two fluids inside pipes in which a carrier fluid flows, which makes it possible for two injected fluids to not come into contact with each other before they are mixed with the carrier fluid, for example water.

Another object of the present invention is to provide a diffuser for mixing two fluids inside pipes in which a carrier fluid flows, which, by virtue of the effects of the high mixing capacity and rapid homogenization of porous diffusion, produces micro-bubbles of CO₂ in the water to be treated, thus ensuring a precise control of the pH and so making it possible, with very little free pipe length, to have an optimal coagulation reaction.

Another object of the present invention is to provide a diffuser for mixing two fluids inside pipes in which a carrier fluid flows, which enables an ease of maintenance thereof, in that it is made so that it can be extracted from the pipe holding the carrier fluid (for example water) even under pressure and without having to stop the flow, thus avoiding plant shutdowns.

A still further object of the present invention is to provide a diffuser that is highly reliable, easily and practically implemented, and low cost.

This aim and these and other objects which will become better apparent hereinafter are achieved by a diffuser for mixing two fluids inside pipes in which a liquid, for example water, flows, characterized in that it comprises a first tube and a second tube, which are arranged mutually concentric, said first tube and said second tube being mutually separated, said first tube being provided on its outer surface with a plurality of holes, said second tube being internal to said first tube, each one of said first and second tubes being provided with an intake with a corresponding valve.

Further characteristics and advantages of the invention will become better apparent from the detailed description of a preferred, but not exclusive, embodiment of the diffuser according to the invention, illustrated by way of non-limiting example in the accompanying drawings wherein:
Figure 1 is a cross-sectional view of the diffuser according to the invention coupled to a pipe; and

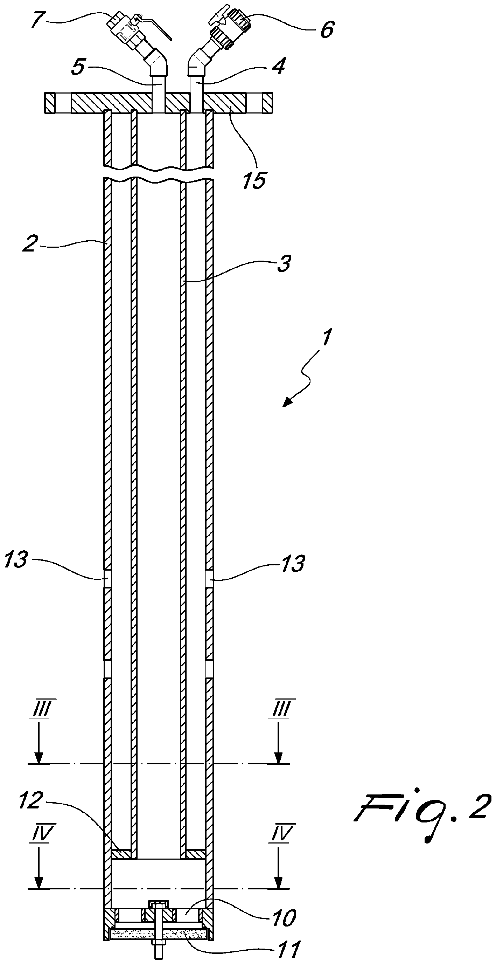

Figure 2 is a cross-sectional view of the diffuser according to the present invention;

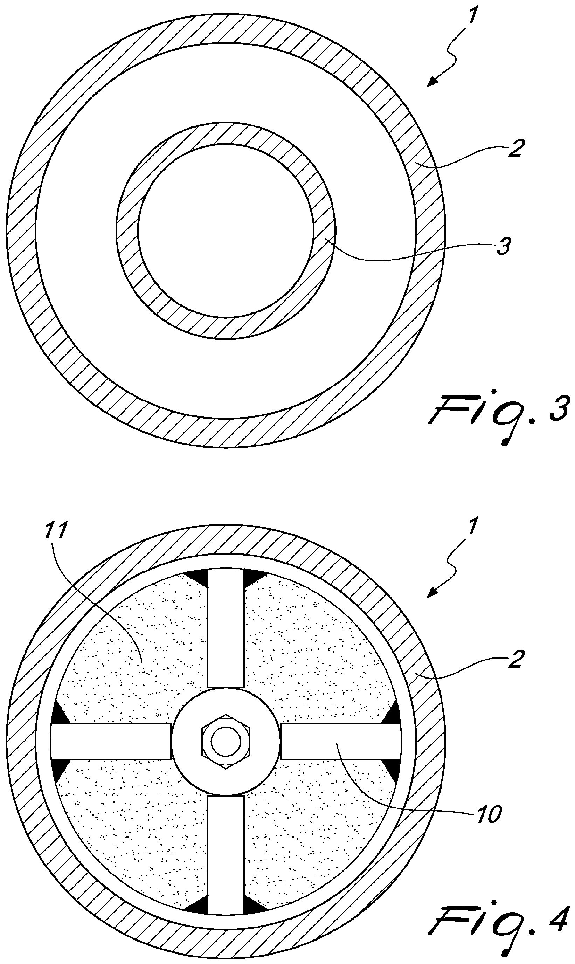

Figure 3 is a cross-sectional view of the device taken along the line III-III shown in Figure 2;
Figure 4 is a cross-sectional view of the device taken along the line IV-IV shown in Figure 2.

With reference to the figures, the diffuser according to the invention, generally designated by the reference numeral 1, comprises a first and a second tube which are arranged mutually concentric, 2 and 3, and which in an upper region are coupled to a flange 15. Each one of the first and second tubes 2, 3 is provided with a respective intake 4 and 5 with valves 6 and 7.

The outer tube 2 is provided in a lower region with a crossbar 10 with a structural function, below which a porous disk 11 is arranged, for example made of sintered bronze or sintered stainless steel.

The inner tube 3 is shorter than the outer tube 2 and is separated from it by a disk-like element 12 that prevents the fluid introduced into the tube 2 from coming into contact with the fluid introduced into the tube 3.

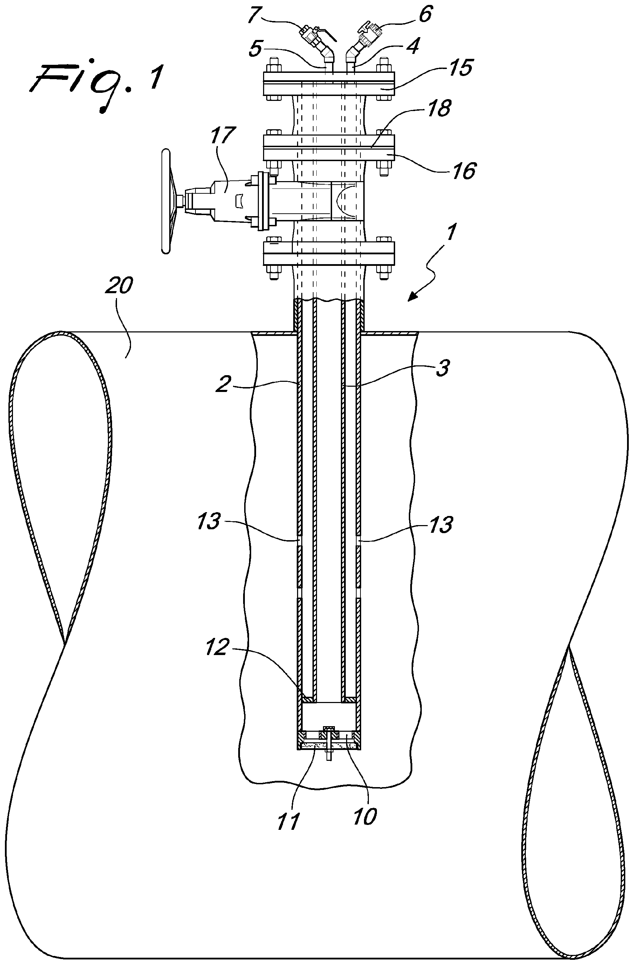

Conveniently, the outer tube 2 is provided with a plurality of holes 13 that allow the outflow of the fluid introduced into it when the diffuser 1 is coupled to a pipe 20, as shown in Figure 1.

The diffuser 1 is furthermore provided with an isolation valve 17 that makes it possible to prevent the outflow of water flowing inside the pipe 20, through the diffuser, when this is made to flow inside the tube 20.

Such valve 17 therefore makes it possible to shut off the flow of the carrier fluid before and after use of the diffuser. Above the isolation valve 17 is a flanged stub pipe 16 that integrates a sealing disk 18, which prevents water from exiting during the insertion or extraction of the diffuser into or out of the main pipe 20.

The diffuser according to the invention is adapted to be inserted into the main pipe 20 at right angles to the pipe proper, as illustrated in Figure 1.

Operation of the diffuser 1 according to the invention is as follows.

First of all, the diffuser is coupled to the pipe 20 and then a first fluid, for example an industrial gas such as gaseous carbon dioxide, oxygen, ozone, etc. or another gas that can be used in the treatment of water, is introduced into the innermost tube 3 by way of the intake 5 with corresponding valve 7, while a second, liquid fluid, typically a coagulating agent or flocculating agent (for example PAC, aluminum polychloride), which is also used to treat water, is introduced into the intake 4 with the corresponding valve 6 of the outermost tube 2.

The two fluids thus flow inside the two concentric tubes, one inner and one outer, and remain separate until they come into contact with the liquid to be treated (in this case water).

Contact occurs at two separate points for each one of the two fluids. For example the carbon dioxide is dissolved at the bottom by passing through the disk made of sintered bronze or sintered stainless steel, while the liquid coagulant is released through the holes 13 made on the outer surface of the outer tube 2.

The diffuser according to the invention makes it possible to reduce the quantity of coagulants or flocculants, for example those having an organometallic structure, that are introduced into the fluid to be treated, for example water for drinking, that is present in the pipe 20, and makes it possible to mix two mutually different fluids simultaneously but separately into the fluid to be treated, and enables the diffusion of micro-bubbles of the first fluid, for example an industrial gas, in the fluid to be treated, and it does not allow the two injected fluids to come into contact with each other before they come into contact with the fluid to be treated, for example water.

Furthermore, the device can be inserted into or extracted from the pipe 20 without interrupting the flow of the water.

Finally, it is not necessary to use electric power for the mixing of the fluids to work.

In practice it has been found that the diffuser according to the invention fully achieves the set aim and objects, in that it makes it possible to inject two different fluids, keeping them separate, into a pipe containing the fluid to be treated.

The diffuser, thus conceived, is susceptible of numerous modifications and variations, all of which are within the scope of the appended claims.

Moreover, all the details may be substituted by other, technically equivalent elements.

In practice, the materials used, as well as the contingent shapes and dimensions, may be any according to the requirements and to the state of the art.

The disclosures in Italian Patent Application No. 102017000011196 (UA2017A000643) from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A diffuser (1) for mixing two fluids inside pipes in which a carrier fluid flows, **characterized in that** it comprises a first tube (2) and a second tube (3), which are arranged mutually concentric, said first tube (2) and said second tube (3) being mutually separated, said first tube (2) being provided on its outer surface with a plurality of holes (13), said second tube (3) being internal to said first tube (2), each one of said first and second tubes (2, 3) being provided with an intake (4, 5) with a corresponding valve (6, 7).

2. The diffuser according to claim 1, **characterized in that** said first tube (2) is provided, at one of its ends, with a porous disk (11).

3. The diffuser according to claim 1 or 2, **characterized in that** said first tube (2) is adapted to be injected with a liquid.

4. The diffuser according to one or more of the preceding claims, **characterized in that** said second tube (3) is adapted to be injected with an industrial gas.

5. The diffuser according to one or more of the preceding claims, characterizing that said diffuser (1) is adapted to be coupled to a pipe (20) in which the carrier fluid flows, at right angles to said pipe.

6. The diffuser according to one or more of the preceding claims, **characterized in that** said industrial gas is gaseous carbon dioxide, oxygen or ozone.

7. The diffuser according to one or more of the preceding claims, **characterized in that** said fluid, adapted to be injected into said first tube (2), is a coagulating or flocculating agent.

8. The diffuser according to one or more of the preceding claims, **characterized in that** it comprises a gate valve (17), which is arranged at said diffuser in order to close off said diffuser.

9. The diffuser according to one or more of the preceding claims, **characterized in that** it comprises, above said gate valve (17), a flanged stub pipe (16) with a sealing disk (18).
